Europäisches Patentamt

European Patent Office

Office européen des brevets

(19)

(11) Numéro de publication: **0 073 743 B1**

(12) **FASCICULE DE BREVET EUROPEEN**

(45) Date de publication du fascicule du brevet:
05.12.84

(51) Int. Cl.³: **C 04 B 35/58** // C25C3/12

(21) Numéro de dépôt: **82810359.8**

(22) Date de dépôt: **27.08.82**

(54) Composition de frittage à base de borure de titane et application de celle-ci à la fabrication d'articles frittés.

(30) Priorité: **31.08.81 CH 5572/81**

(43) Date de publication de la demande:
**09.03.83 Bulletin 83/10**

(45) Mention de la délivrance du brevet:
**05.12.84 Bulletin 84/49**

(84) Etats contractants désignés:
**AT BE CH DE FR GB IT LI LU NL SE**

(56) Documents cités:
**FR - A - 1 105 860**
**FR - A - 2 468 564**
**US - A - 2 735 155**
**US - A - 3 041 142**
**US - A - 4 266 977**

(73) Titulaire: **BATTELLE MEMORIAL INSTITUTE, 7 route de Drize, CH-1227 Carouge/Genève (CH)**

(72) Inventeur: *de Pous, Olivier, 29, rue de Chêne-Bougeries, CH-1224 Chene-Bougeries (CH)*
Inventeur: **Richon, Dominique, 26, rue de Vallard, F-74240 Gaillard (FR)**
Inventeur: **Novotny, Hans, Steinbach 7, A-1215 Ernstbrunn (AT)**

(74) Mandataire: *Dousse, Blasco et al, 7, route de Drize, CH-1227 Carouge/Genève (CH)*

## Description

La présente invention a pour objet une composition pulvérulente à base de borure de titane $TiB_2$. Cette composition est utilisée pour fabriquer, par frittage thermique sans pression, des objets de $TiB_2$ frittés de haute densité convenant particulièrement au domaine de l'électrothermie de l'aluminium. L'invention a également pour objet le procédé d'application de ladite composition à la fabrication par frittage thermique d'articles frittés en $TiB_2$, notamment d'électrodes pour l'électrolyse de la cryolithe ou du chlorure d'aluminium.

On sait que le borure de titane est un matériau très dur, résistant à l'oxydation et de conductivité électrique élevée; on peut donc avantageusement l'utiliser comme matériau d'électrodes dans le domaine de la fabrication de l'aluminium par électrolyse (procédés Hall-Heroult et autres). En effet, lorsqu'il est pur et compact, il résiste au choc thermique et à la corrosion par l'aluminium fondu et par la cryolithe. Industriellement, les pièces destinées aux électrolyseurs sont obtenues à partir de poudre de $TiB_2$ soit par frittage à chaud sous pression lorsque la poudre est très pure, soit par frittage normal lorsque la teneur en oxygène ($TiO_2$ ou $B_2O_3$) est élevée dans la poudre de départ.

La qualité des matériaux obtenus dans le deuxième cas étant insuffisante pour l'utilisation envisagée, car la présence d'oxydes dans le matériau fritté provoque une perte très notable de sa résistance à la corrosion et au choc thermique, seule la méthode de frittage sous pression permet de préparer des pièces répondant aux exigences susmentionnées. Néanmoins, les pièces frittées en $TiB_2$ pur obtenues par frittage thermique sous haute pression de poudre de borure de titane sont chères et difficiles à obtenir en raison des problèmes techniques liés à l'application simultanée de températures élevées et de hautes pressions.

On a remédié à ces difficultés par l'emploi, lors du frittage thermique sans pression, d'additifs de densification qui permettent de réaliser des formes compactes de densité élevée. Comme tels additifs, on peut citer les siliciures des métaux des groupes 4a à 6a du tableau périodique (brevet US N° 4017426), le phosphure de nickel et un composant choisi parmi Cr, Mo, Nb, Ta, Re, Al et leurs borures (brevet US N° 4246027), des carbures de tungstène, de titane et de bore (brevet US N° 4108670) et le nitrure de bore (brevet US N° 4097567). Cependant, le frittage de poudres de $TiB_2$ contenant de tels additifs donne des formes dans lesquelles ces additifs restent inclus, ce qui est indésirable pour les raisons suivantes: contamination de l'aluminium fondu et pollution de celui-ci par ces impuretés; lente restructuration indésirable de la matière des électrodes, mauvaise résistance aux chocs thermiques. En effet, au cours de l'électrolyse des minerais d'aluminium, la présence d'impuretés dans le $TiB_2$ conduit, par lente migration de celles-ci, à la formation d'une structure à gros grains plus fragile, moins résistante à la corrosion et à la précipitation de phases de type $Ti_2AlN$ et $Ti_2AlC$ lorsque des carbures ou des nitrures sont utilisés comme additifs.

La présente invention remédie parfaitement à ces inconvénients.

En effet, la composition de l'invention comprend, comme additifs de densification, de l'hydrure de titane et du bore en proportions relatives telles que, lors du frittage thermique, la réaction $TiH_2 + 2B \rightarrow TiB_2 + H_2$ ait lieu. Ainsi, lors du compactage et du frittage thermique, l'hydrure de titane et de bore agissent comme densificateurs et, après départ de l'hydrogène consécutif à la décomposition de l'hydrure, le titane se combine avec le bore en donnant du $TiB_2$ qui, identique chimiquement à la matière soumise au frittage, ne constitue donc pas, après chauffage, une impureté restant incluse dans celle-ci. Par ailleurs, la décomposition du $TiH_2$ fournit une poudre de titane de grande finesse, ce qui favorise la densification pendant le frittage. Normalement, les poudres de titane d'une finesse comparable disponibles commercialement contiennent une proportion d'oxydes (ce qui est indésirable dans le cas présent, comme on l'a vu plus haut) et, en conséquence, le $TiH_2$ de la composition de l'invention est, en fait, un précurseur de formation d'une telle poudre de fine granulométrie, l'hydrogène produit par la décomposition pouvant, de plus, agir comme réducteur des oxydes éventuellement présents dans la composition.

Ainsi, l'invention permet le frittage sans pression par l'ajout d'additifs de densification qui, se combinant pour former du $TiB_2$, ne restent pas dans le produit final sous forme d'impuretés dissoutes ou d'inclusion.

Cette application de la composition donne donc des résultats pratiquement similaires à ceux résultant du frittage à chaud sous pression de poudre de $TiB_2$ sans additifs. Il permet, en plus, de fabriquer dans des conditions faciles à réaliser des formes complexes requises pour les applications électrothermiques, ces formes étant obtenues avec une précision et une qualité de finition équivalentes à celles résultant de l'utilisation de densificateurs connus. La poudre à fritter de l'invention constitue donc un progrès technique considérable sur les poudres connues jusqu'à présent. Les préparations pondérales du mélange $TiH_2 + B$ par rapport au total de la présente composition sont choisies de manière que le taux de $TiB_2$ ainsi incorporé à l'objet fritté réalisé par frittage de ladite composition soit de l'ordre de 2 à 10% en poids, de préférence 3 à 7%. En effet, au-dessous de 2%, l'effet recherché est insuffisant et des quantités supérieures à 10% n'amènent pas d'améliorations significatives.

Pour mettre en œuvre la composition de l'invention, on la moule par un moyen techniquement approprié (par exemple par l'application d'une pression isostatique ou dirigée) puis on la soumet au frittage thermique. En conséquence, le procédé suivant l'invention pour appliquer la présente composition à la fabrication d'objets de $TiB_2$ frittés se définira comme suit:

a) on introduit la poudre à fritter dans un moule (respectivement une matrice) ayant la forme de l'objet désiré,

b) on soumet ce moule (respectivement cette matrice) à une pression isostatique (respectivement uniaxiale) de 1 à 6 t/cm², puis on démoule l'objet «vert» ainsi moulé,

c) on chauffe cet objet ainsi compacté sous vide afin de le dégazer et de provoquer la décomposition de l'hydrure de titane en titane plus hydrogène,

d) on chauffe l'objet de 30 à 120 min entre 1800 et 2200°C sous vide ou sous un gaz inerte, cette dernière opération provoquant le frittage et la densification recherchés.

Ce procédé est extrêmement avantageux car, en tenant compte du retrait pendant densification (de l'ordre de 40 à 60% en volume), on peut former l'objet aux cotes approximatives voulues, ce qui permet de minimiser l'usinage ultérieur. Il est en outre possible de rectifier la pièce avant frittage (usinage à vert) ou après préfrittage à environ 1400°C. De préférence, avant l'étape a du présent procédé d'application, on ajoute un liant à la poudre à fritter. Ce liant a pour but de coller entre elles momentanément, à froid, les particules de poudre lors du moulage et d'améliorer la tenue mécanique de l'objet moulé «vert» lors des manipulations de celui-ci. Bien entendu, le liant est choisi de manière qu'il se décompose (ou s'évapore) complètement lors de l'étape c du procédé et qu'il n'en reste aucune trace après frittage. Comme liant, on peut utiliser une cire ou un autre liant organique habituellement prévu à cet effet. Le camphre convient parfaitement.

De préférence, on effectuera les étapes préliminaires a et b suivant les moyens habituels connus de la technologie des céramiques. Ainsi on moule la poudre de la composition, avec ou sans liant, dans un moule à la forme de l'objet désiré. Puis, suivant l'étape b, on soumet l'objet moulé à un pressage isostatique sous environ 1 à 6 T/cm² pendant quelques secondes, en moule sec ou en moule humide. Après pressage et démoulage, on obtient l'objet préformé («green») constitué de la poudre agglomérée dont la densité «à vert» est de l'ordre de 1,4 à 1,8 g/cm³, cette valeur dépendant de la granulométrie du $TiB_2$ utilisée pour la formulation de la composition de départ. A ce sujet, il est avantageux d'employer une poudre de granulométrie très fine dont la surface spécifique est de l'ordre de 1,0-1,5 m²/g (particules de l'ordre du micron).

En ce qui concerne les étapes c et d, on peut procéder comme suit: on place le «green» dans un creuset de tantale et on introduit celui-ci dans un four (la forme du creuset est de préférence prévue pour que l'objet soit protégé contre les radiations directes de chauffage). Puis, pour effectuer le dégazage, c'est-à-dire successivement l'évaporation du liant organique et le départ de l'hydrogène du $TiH_2$, on chauffe progressivement 2-3 h jusqu'aux alentours de 800 à 1000°C, sous un vide de 0,133-0,0133 Pa ($10^{-3}$-$10^{-4}$ Torr). Puis on monte plus rapidement (800°C/h) la température (sous un vide de 0,0133-0,00133 Pa ($10^{-4}$-$10^{-5}$ Torr)

ou sous pression ordinaire d'argon) jusqu'au point de frittage, on maintient cette température le temps voulu et, finalement, on laisse l'ensemble refroidir. Le temps de chauffage et la température de frittage sont liés en ce sens que le temps est d'autant plus court que la température est élevée. De préférence, on chauffe de 30 min à 3 h vers 2000°C; ces conditions ne sont données ici qu'à titre indicatif, mais mettent en évidence l'intérêt économique du présent procédé. Après frittage, on peut, si désiré, recuire la pièce à une température (par exemple de l'ordre de 1600°C) afin d'en modifier la microstructure et d'en améliorer les propriétés mécaniques.

Pour la préparation du mélange en poudre constituant la composition de l'invention, on peut utiliser sans autre des produits commerciaux, pour autant que leur granulométrie soit convenable et que leur pureté soit suffisante. Si les poudres utilisées sont trop grossières, on pourra les affiner préalablement dans des broyeurs ou moulins appropriés, également suivant les moyens connus et de préférence sous atmosphère inerte. Ou bien, on pourra effectuer le mélange avec de telles poudres et broyer ce mélange de telle manière qu'après broyage, les particules de ses constituants acquièrent une granulométrie convenable comprise dans la plage susmentionnée. Comme broyeurs, on peut employer un moulin à billes en $TiB_2$ si on désire une forme frittée avec un minimum d'impuretés, ou en carbure de tungstène ou en métal dur si la présence d'une faible quantité de WC dans l'objet fritté n'est pas préjudiciable.

Pour parvenir à un broyage et à une dispersion efficace des constituants de la poudre de la présente composition, on a avantage à effectuer cette opération dans un liquide qui donne au mélange une consistance pâteuse et qui, de plus, a l'avantage de protéger $TiB_2$ de l'oxydation. Comme liquide, on peut utiliser un liquide organique dont la nature n'est pas critique; les hydrocarbures et les alcools conviennent bien, et de préférence on utilise de l'hexane ou un mélange d'éther de pétrole et de tert.-butanol. Après broyage, on sèche soigneusement la poudre sous atmosphère inerte (argon ou autre), ou sous vide.

On notera qu'on peut, au stade du broyage de la poudre de la composition de l'invention, y incorporer des additifs éventuels, par exemple le liant organique susmentionné. On peut envisager d'utiliser un composé organique ou un mélange de composés organiques à la fois comme véhicule de broyage et comme liant.

La composition de l'invention ainsi que son procédé d'utilisation pour fabriquer des pièces par frittage conduit à des poudres dont les propriétés physiques et chimiques sont équivalentes à celles des produits similaires obtenus par pressage à chaud. Ainsi, les densités obtenues après frittage peuvent atteindre facilement 4,5 à 4,6 g/cm³, ce qui correspond à la densité théorique calculée. Il faut cependant relever que les valeurs élevées de densités mesurées peuvent être dues, en partie, à l'inclusion de faibles quantités de WC (lesquelles proviennent d'un broyage initial de la poudre de départ dans un moulin à billes de carbure de tungstène). Si désiré, on peut également déterminer la compacité du produit fritté par l'analyse métallographique plutôt que par mesure de la densité.

Les exemples qui suivent illustrent l'invention plus en détail.

*Exemple 1:*

Dans un moulin à billes de carbure de tungstène d'une capacité de 500 ml contenant 100 ml d'hexane, on a mélangé et broyé 24 h sous atmosphère inerte (Ar ou $N_2$), 95 g de poudre de $TiB_2$ Cerac, T-II-50, granulométrie (325 mesh) avec 3,57 g de $TiH_2$ (origine: Merck Res 12384) et 1,57 g de poudre de bore cristallin (origine: Cerac 1012 S), ces proportions étant prévues pour que, après départ d'hydrogène lors du frittge, la proportion de densificateur dans l'objet fritté soit de 5% en poids. Le moulin tournait à environ 140 tr/min pendant le broyage. Puis on a récolté la poudre sous atmosphère inerte et on l'a séchée sous vide. Après cette opération, sa surface spécifique était de 1,2 m²/g, valeur mesurée par la méthode du BET. On ensuite traité cette poudre, toujours à l'abri de l'air, au moyen de 40 ml de solution à 5% de camphre dans l'éther, ce qui correspond, après évaporation de l'éther sous agitation homogène, à l'incorporation dans la poudre de 2% en poids de camphre.

Toujours sous protection d'une couverture de gaz inerte, on a introduit le mélange de poudre de camphre dans un moule en résine silicone à durcissement rapide et on l'a pressé (20 s sous 3 t/cm²) en forme de pièce pour électrode (barreau). Le démoulage du «vert» ainsi obtenu et son stockage se font sous atmosphère inerte, toujours pour éviter une oxydation superficielle éventuelle.

On a ensuite placé le «vert» dans un creuset fermé en tantale et disposé celui-ci dans l'enceinte d'un four électrique à résistance tungstène. On a évacué l'enceinte à 0,665 mPa (5 × 10⁻⁶ Torr) environ et on a lentement chauffé le creuset jusqu'à environ 800°C (environ 3 h) pour effectuer l'élimination du camphre et de l'hydrogène du $TiH_2$ tout en gardant la pression inférieure à 13,3 mPa (10⁻⁴ Torr). On a ensuite chauffé à une température de 2000°C toujours sous 13,3 mPa (environ 1 h) et on a laissé refroidir. On a ainsi obtenu une pièce frittée (B) dont on a mesuré les propriétés, celles-ci figurant au tableau I. Par ailleurs, on a répété les opérations ci-dessus en utilisant pour un premier échantillon (A) de contrôle une poudre de $TiB_2$ sans additif de densification (donc ne faisant pas partie de l'invention) et, pour un second échantillon (C) une composition suivant l'invention à 10% d'additifs. On a également préparé des échantillons A', B' et C' avec les mêmes produits de départ et dans les mêmes conditions, à l'exception du temps de frittage qui a été de 2 h. Les densités obtenues figurent au tableau I.

*Tableau I*

| Echantillon | Additif (% en poids) | Temps de frittage (h) | Densité (g/cm³) |
|---|---|---|---|
| A | 0 | 1 | 4,41 |
| B | 5 | 1 | 4,49 |
| C | 10 | 1 | 4,50 |
| A' | 0 | 2 | 4,33 |
| B' | 5 | 2 | 4,57 |
| C' | 10 | 2 | 4,44 |

On voit par les résultats ci-dessus que les densités les plus élevées sont liées à l'emploi d'un taux d'additif voisin de 5% et à un frittage de 2 h (échantillon B').

On a répété la série des essais précédents dans des conditions identiques à celles reportées dans le tableau I, à l'exception de la température de frittage qu'on a portée à 2100°C (échantillons D, E, F et D', E' et F'). On a également préparé une série d'échantillons (D'', E'' et F'') pour lesquels le temps de frittage (à 2100°C) n'était que de ½ h. Les résultats de ces essais figurent au tableau II ci-après.

*Tableau II*

| Echantillon | Additif (% en poids) | Temps de frittage (h) | Densité (g/cm³) |
|---|---|---|---|
| D'' | 0 | ½ | 4,50 |
| E'' | 5 | ½ | 4,56 |
| F'' | 10 | ½ | 4,46 |
| D | 0 | 1 | 4,57 |
| E | 5 | 1 | 4,61 |
| F | 10 | 1 | 4,50 |
| D' | 0 | 2 | 4,38 |
| E' | 5 | 2 | 4,62 |
| F' | 10 | 2 | 4,51 |

Comme précédemment, les densités les plus élevées sont obtenues lorsque la teneur en additif est voisine de 5%. Par ailleurs, à 2100°C, la durée de frittage peut être écourtée (obtention de densités élevées après un chauffage de l'ordre de ½ h seulement). Par contre, l'accroissement de densité exclusivement liée à une augmentation du temps de chauffe de 1 h à 2 h ne paraît pas significatif.

*Exemple 2:*

On a préparé un échantillon identique à l'échantillon (B) de l'exemple précédent (composition à 5% d'additifs) mais, en ce qui concerne le frittage, on a procédé sous argon (au lieu de vide), les opérations étant réalisées dans les conditions suivantes:

La forme compacte pressée à été posée sur une plaque de graphite au centre d'éléments chauffants également en graphite, le tout dans l'enceinte d'un four de frittage.

L'ensemble a été dégazé sous un vide primaire (à 300°C, 0,133 Pa). Puis l'enceinte a été remplie d'argon (99,5%) à pression ordinaire et la température a été portée à 2000°C à raison de 1000°C/h; cette température a été encore maintenue 2 h puis le chauffage a été coupé. Après refroidissement, on a mesuré la densité de l'objet fritté et on a trouvé une valeur de 4,12 g/cm³. Les résultats du frittage sous atmosphère inerte sont donc légèrement inférieurs à ceux obtenus sous vide.

*Exemple 3:*

On a préparé une série d'échantillons suivant la méthode de l'exemple 1 avec des compositions à 5% d'additifs et des temps de frittage de ½ h (G), 1 h (B) et 2 h (B') à 2000°C. On a également préparé des échantillons correspondants (Ga, Ba et B'a) pour lesquels le bore utilisé était amorphe (origine: Fluka No 15570) au lieu d'être cristallin. Les résultats figurent au tableau III.

*Tableau III*

| Echantillon | Etat du bore | Temps de frittage (h) | Densité (g/cm³) |
|---|---|---|---|
| G | cristallisé | ½ | 4,32 |
| Ga | amorphe | ½ | 4,51 |
| B | cristallisé | 1 | 4,49 |
| Ba | amorphe | 1 | 4,58 |
| B' | cristallisé | 2 | 4,57 |
| B'a | amorphe | 2 | 4,54 |

Ces résultats montrent qu'à 2000°C et pour des durées de frittage courtes, le bore amorphe donne des densités plus élevées que le bore cristallisé.

On a répété les essais ci-dessus mais en portant la température de frittage à 2100°C. Les résultats sont rassemblés au tableau IV.

*Tableau IV*

| Echantillon | Etat du bore | Temps de frittage (h) | Densité (g/cm³) |
|---|---|---|---|
| E'' | cristallisé | ½ | 4,56 |
| E''a | amorphe | ½ | 4,42 |
| E | cristallisé | 1 | 4,61 |
| Ea | amorphe | 1 | 4,41 |
| E' | cristallisé | 2 | 4,62 |
| E'a | amorphe | 2 | 4,33 |

Ces résultats montrent qu'à 2100°C et pour des durées de frittage élevées, le bore cristallisé donne des densités plus élevées que le bore amorphe.

**Revendications**

1. Composition pulvérulente de frittage thermique sans pression à base de borure de titane pour la fabrication d'électrodes résistant à la corrosion par l'aluminium fondu, caractérisée par le fait qu'elle contient, comme additifs de densification, de l'hydrure de titane et du bore, la proportion relative de ces additifs étant de 1 mol de $TiH_2$ pour 2 mol de bore.

2. Composition suivant la revendication 1, caractérisée par le fait qu'elle contient de 2 à 10% en poids desdits additifs.

3. Composition suivant la revendication 1, caractérisée par le fait que la surface spécifique de la poudre de $TiB_2$ utilisée est supérieure à 1 m²/g.

4. Procédé de fabrication d'objets en $TiB_2$ frittés thermiquement au moyen de la composition suivant la revendication 1, caractérisé par le fait que:

a) on introduit la poudre à fritter dans un moule ou une matrice ayant la forme de l'objet désiré,

b) on soumet ce moule, respectivement cette matrice, ainsi remplis à une pression isostatique, respectivement uniaxiale de 1 à 6 t/cm², puis on démoule l'objet «vert» ainsi moulé,

c) on chauffe cet objet sous vide afin de le dégazer et de provoquer la décomposition de l'hydrure de titane qu'il contient en titane et en hydrogène,

d) on chauffe l'objet de 30 à 120 min entre 1800 et 2200°C sous vide ou sous une atmosphère inerte, cette opération provoquant le frittage et la densification recherchés.

5. Procédé suivant la revendication 4, caractérisé par le fait que l'étape c est effectuée en chauffant progressivement jusqu'à 800°C sous une pression ne dépassant pas 0,0133 Pa (10 $^{-4}$ Torr).

6. Procédé suivant la revendication 4, caractérisé par le fait que l'étape d est effectuée sous atmosphère d'argon.

7. Procédé suivant la revendication 4, caractérisé par le fait que, avant d'effectuer l'étape a, on mélange la poudre avec un liant organique de manière à stabiliser mécaniquement l'objet «vert» moulé, ce liant s'évaporant lors de l'étape c.

**Patentansprüche**

1. Pulverförmige, thermisch ohne Druck sinterfähige Zusammensetzung auf der Basis von Titanborid zur Herstellung von Elektroden, die gegen die Korrosion von geschmolzenem Aluminium widerstandsfähig sind, dadurch gekennzeichnet, dass sie als Verdichtungszusätze Titanhydrid und Bor enthält, wobei der relative Anteil dieser Zusätze 1 mol $TiH_2$ zu 2 mol Bor ist.

2. Zusammensetzung nach Anspruch 1, dadurch gekennzeichnet, dass sie 2 bis 10 Gew.-% dieser Zusätze enthält.

3. Zusammensetzung nach Anspruch 1, dadurch gekennzeichnet, dass die spezifische Oberfläche des verwendeten Pulvers aus $TiB_2$ grösser als 1 m²/g ist.

4. Verfahren zur Herstellung von Gegenständen aus thermisch gesintertem $TiB_2$ mit Hilfe der Zusammensetzung gemäss Anspruch 1, dadurch gekennzeichnet, dass man

a) das zu sinternde Pulver in eine Form oder eine Matrize einbringt, die die Gestalt des gewünschten Gegenstandes hat,

b) diese so gefüllte Form bzw. Matrize einem isostatischen bzw. uniaxialen Druck von 1 bis 6 t/cm² aussetzt und dann den so geformten „grünen" Gegenstand entformt,

c) diesen Gegenstand unter Vakuum erhitzt, um ihn zu entgasen und die Zersetzung des enthaltenen Titanhydrides in Titan und Wasserstoff hervorzurufen,

d) den Gegenstand 30 bis 120 min unter Vakuum oder einer inerten Atmosphäre zwischen 1800 und 2200°C erhitzt, wobei dieser Vorgang das gewünschte Sintern und die gewünschte Verdichtung hervorruft.

5. Verfahren nach Anspruch 4, dadurch gekennzeichnet, dass der Schritt c durchgeführt wird, indem man schrittweise bis 800°C unter einem Druck erhitzt, der 0,0133 Pa (10⁻⁴ Torr) nicht überschreitet.

6. Verfahren nach Anspruch 4, dadurch gekennzeichnet, dass der Schritt d unter Argonatmosphäre durchgeführt wird.

7. Verfahren nach Anspruch 4, dadurch gekennzeichnet, dass man vor Durchführen des Schrittes a das Pulver mit einem organischen Bindemittel vermischt, um so mechanisch den geformten, „grünen" Gegenstand zu stabilisieren, wobei dieses Bindemittel beim Schritt c verdampft.

## Claims

1. Powder composition for thermal sintering without pressure based on titanium boride for manufacturing electrodes resistant to molten aluminium corrosion, characterized in that it contains boron and titanium hydride as densifying additives, the relative proportion of these additives being 1 mol $TiH_2$ to 2 mols boron.

2. Composition according to Claim 1, characterized in that it contains 2 to 10% by weight of the said additives.

3. Composition according to Claim 1, characterized in that the specific surface area of the $TiB_2$ powder used is greater than 1 m²/g.

4. Method of manufacturing thermally sintered $TiB_2$ objects by means of the composition according to Claim 1, characterized in that

(a) the powder to be sintered is placed in a mould or matrix having the shape of the article desired;

(b) this mould, respectively this matrix, thus filled is subjected to an isostatic, respectively uniaxial, pressure of 1 to 6 t/cm² then the "green" article moulded in this way is removed from the mould;

(c) this article is heated under vacuum in order to degas it and to cause decomposition of the titanium hydride which it contains into titanium and hydrogen;

(d) the article is heated for 30 to 120 min between 1800 and 2200°C under vacuum or in an inert atmosphere, this operation causing the desired sintering and densification.

5. Method according to Claim 4, characterized in that stage (c) is performed by heating progressively to 800°C at a pressure which does not exceed 0.0133 Pa (10⁻⁴ Torr).

6. Method according to Claim 4, characterized in that stage (d) is performed in an argon atmosphere.

7. Method according to Claim 4, characterized in that, before performing stage (a), the powder is mixed with an organic binder so as to mechanically stabilize the "green" moulded article, this binder evaporating during stage (c).